# EUROPEAN PATENT SPECIFICATION

(11) **EP 1 873 881 B1**
(45) Date of publication and mention of the grant of the patent: **10.08.2011**
(21) Application number: 07380179.7
(22) Date of filing: 20.06.2007
(51) Int. Cl.: H02G 3/22

(54) **Bushing arrangement**
Buchsenanordnung
Agencement de boîte de raccordement

(30) Priority: 28.06.2006 ES 200601525 U
(43) Date of publication of application: 02.01.2008
(73) Proprietor: Unex Aparellaje Electrico S.L., 08903 L'Hospitalet de Llobregat (Barcelona) (ES)
(72) Inventor: Salcedo Suñol, Eloi, 08620 Sant Vincenç dels Horts (Barcelona) (ES)
(74) Representative: Curell Aguilà, Marcelino

(56) References cited:
- WO-A-01/57981
- GB-A- 1 400 786

## Description

### Field of the invention

This invention relates to a bushing arrangement, in particular one that is multi-adaptable for passing therethrough a wide range of different diameter electrical conductors and which is part of, or is associated with a rigid dielectric separation surface between two spaces, and said bushing arrangement, in protecting the electrical conductors from possible electricity leaks caused through damage thereto, prevents foreign bodies from passing between said spaces and/or is capable of retaining the conductors.

### State of the art

The problem of passing electrical conductors from one side to another of a construction wall, a facing or a wall of an electrical apparatus separating two spaces, is known. Said construction wall, facing or walls of material can be more or less electricity conductors or dielectric material. In the first case electrical leaks must be prevented in case of possible damage to the electrical conductor insulation caused by rubbing against the edges of the passage hole when shifting slightly, owing to handling during installation or the actual weight of the conductors, which may break the superficial continuity of the insulation and cause accidental short circuiting. In the second case, the passage of foreign bodies from one space to the other must be avoided, as well as any mechanical tension in the electrical conductors.

In order to overcome the first mentioned drawback, for a long time bushings have been used made from electrical insulating material that is compatible with electrical conductor insulation, such as rubber, porcelain, plastic and the like, with said bushings adjusting inside the conduit passage formed by the hole in the construction wall, facing or inner wall, and having an arrangement with blunt terminal edges, which prevents possible damage to the electrical conductors and facilitates their passage through a construction wall, facing or wall of an electrical switchboard box.

This arrangement is faultless when the electrical conductors run horizontally and it is not necessary to insulate the environment on one face of the construction wall, facing or inner wall with respect to the other face thereof. However, when the electrical conductors hang from the passage hole in the construction wall, facing or wall of the metallic or plastic box of an electrical control apparatus or mechanism, it is obvious that an arrangement must be provided whereby the passage of foreign elements from one environment to another can be avoided and/or whereby the electrical conductors can be retained in said passage hole to prevent them from slipping, therefore avoiding mechanical tension and possible damage to the electrical conductor insulating material.

One of the mentioned drawbacks occurs, for example, in the case of articulated raceways for electrical conductors that is the object of Spanish Utility Model No. ES1052287U in the name of the applicant, wherein base discs are required at each end of said articulated raceway having one single diameter size passage holes for the passage of electrical power conductors and other smaller diameter passage holes that are suitable for passing electrical conductors for telephone, computing, security, etc. lines.

The described base discs suffer from the drawback that they cannot retain electrical conductors with a smaller diameter than that of the pre-established holes, whereby not only do the electrical conductors slide, but also their insulation is possibly damaged because they dig into the edges of said passage holes.

GB-A-1400786 discloses a flexible seal for a cable through hole, to be mounted in a single opening in a wall. The seal has a tapering section comprising a narrow end with a passage through which a cable can be passed so that the wall of the passage will seal the cable. The seal is set sealably against the edge of the wall opening by means of a flange and a groove arranged in the outer periphery of the seal and dimensioned to fit the edge of the opening.

WO-01/57981 discloses a flexible seal for a cable through hole which is similar to the one disclosed in GB-A-1400786, but in which the tapering section of the seal comprises a narrow end provided with a bead which is turnable to a locking position in which the seal surrounds a cable sealably. The seal is set sealably against the edge of the wall opening by means of a seal collar and a locking shoulder arranged in the outer periphery of the seal and dimensioned to fit the edge of the opening.

### Disclosure of the invention

In order to overcome the mentioned drawbacks, the solution has been adopted whereby the passage holes in the walls can adapt their passage diameter to the diameter of the electrical conductors, prevent the passage of foreign bodies therethrough and, also, provide non-aggressive retention means for said electrical conductors.

According to the preceding solution, the arrangement that is the object of the invention has been developed, which consists in a bushing arrangement that can adapt for the passage therethrough of different diameter electrical conductors and which forms part of or is associated with a wall arrangement comprising a first insulating plate having a substantially rigid surface and which forms a separation between two juxtaposed spaces. The bushing arrangement according to the invention is characterized in that said first plate has a plurality of through openings and said first plate is intimately and superficially associated, on at least one face thereof, with a second elastically flexible plate that is thinner than said first plate, said second plate forming a plurality of hollow projections, each of said hollow projections coincides with one out of said plurality of through openings and forms a wide dome-shaped wall that has, in the centre, an area provided with passage means that enable the passage therethrough of an electrical conductor by adapting to the perimeter of the latter.

In an advantageous variation of the invention, said passage means, which enable the passage therethrough of an electrical conductor by adapting to the perimeter of the latter, consist in said hollow projection having an inverted frustoconical shape having a smooth wall and a smaller base made up of a through hole.

An advantageous embodiment consists in said hollow projection having a first, very obtuse, inverted frustoconical shape, with a smooth wall that forms the lateral surface of said hollow projection, and an inverted frustoconical central weakening the smaller base of which is shaped by said through hole.

In another advantageous variation of the invention, said passage means, that enable the passage therethrough of an electrical conductor by adapting to the perimeter of the latter, consist in said hollow projection having a bottom wall and being channelled with weakening lines arranged so that, when said weakening lines are broken, said bottom wall breaks away leaving cantilevered elastic tabs formed in the wall of said hollow projection.

Preferably, said weakening lines in the wall of said hollow projection coincide with generating lines or edges of said wall.

The invention also contemplates a solution wherein said weakening lines in the wall of said hollow projection are formed by through grooves.

Preferably, said hollow projection has an inverted frustoconical shape and said through grooves are arranged according to the generating lines of said hollow projection, so that between every two consecutive through grooves one of said cantilevered elastic tabs is formed, said cantilevered elastic tabs being associated at the end thereof with the bottom wall of said hollow projection by a weakening line.

Advantageously, said hollow projection has a shape included in the group comprising the lateral surfaces of conic frustrums, pyramid frustrums and those of any solid shape created by a conic.

In an advantageous embodiment, said first plate is trapped inside said second plate and said hollow projection extends, through said through opening in the first plate, from one face of said second plate without reaching the opposite face of said second plate.

In another advantageous embodiment, said first plate is trapped inside said second plate and said hollow projection extends, through said through opening in said first plate, from one face of said second plate and beyond the opposite face of said second plate.

### Brief description of the drawings

In order to facilitate the understanding of the preceding ideas, a description is provided below of some embodiments of the invention, with reference to the accompanying illustrative drawings, in which:
Figure 1, represents, in diametric section, a bushing arrangement according to the invention, corresponding to one of those intended, preferably, for retaining electrical conductors.
Figure 2, represents the projection of the bushing arrangement in the preceding figure, seen in an elevation view along the convex face thereof.
Figure 3, represents the case illustrated in Figure 1 once the bottom wall of the projection has been broken and an electrical conductor has been passed through, which is retained by the cantilevered elastic tabs resulting from the breakage.
Figure 4, represents a perspective view of a base disc that can attach to the ends of an articulated guide for electrical conductors.
Figure 5, represents, in diametric section, a bushing arrangement according to the invention, which is intended, preferably, to provide tightness against foreign bodies in the passage of the electrical conductors.
Figure 6, represents the case illustrated in the preceding figure once an electrical conductor has passed through the bottom wall of the hollow projection and is retained by the elastically deformed wall of said hollow projection.
Figure 7, represents, in an external top view, a base disc that can attach to an articulated guide for electrical conductors that includes the bushing arrangements based on Figures 5 and 6, with the section line corresponding to said Figure 5 being indicated in the figure.
Figure 8, represents, in an external perspective view, the base disc of the preceding figure.
Figure 9, represents, in an internal perspective view, the base disc for articulated guides illustrated in Figures 7 and 8.

### Detailed description of some embodiments of the invention

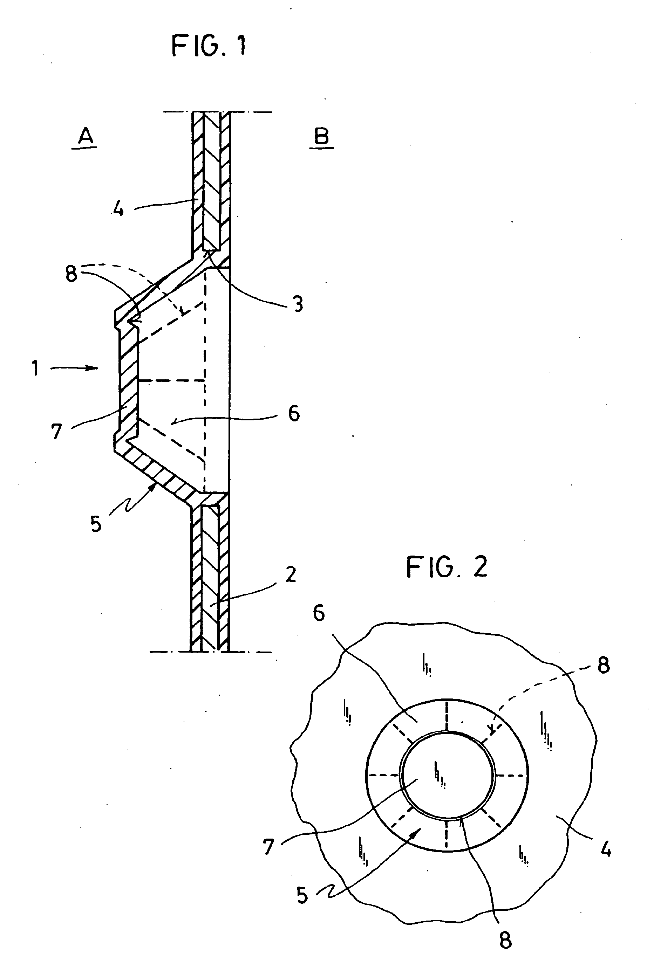

The bushing arrangement 1 that is the object of the invention, as shown in its functional aspect in Figures 1, 2 and 3, forms part of or is associated with a wall arrangement made up of a first thin plate 2 which, being insulating and substantially rigid, forms a rigid separation surface between two spaces A and B, with at least one through opening 3 that is intimately and superficially associated with a second plate 4 that is thinner than first plate 2. In this embodiment, first plate 2 is trapped within second plate 4, which is made from elastic material and is substantially semi-rigid. Second plate 4 forms a hollow projection 5, which coincides with through opening 3 in first thin plate 2, and extends from one side of second plate 4, externally beyond the second side. Hollow projection 5 has its wall 6 and bottom wall 7 channeled by weakening lines 8 arranged so that when they are broken they enable bottom wall 7 to break away and cantilevered elastics tabs 9 to be formed which, in combination, act as elastic elements that allow the electrical conductors 10, which pass through the space created in said hollow projection 5 by the disappearance of its bottom wall 7, to pass through easily and to be retained slightly.

As can be seen in Figures 1 to 3, hollow projection 5 has a shape included in the group comprising the lateral surfaces of conic frustrums, pyramid frustrums, which is the case in said figures, and any solid created by a conic.

Weakening lines 8 of walls 6 of hollow projection 5 are made to coincide with the generating lines or edges of actual wall 6 of hollow projection 5, so that said weakening lines indicate cutting or breaking lines that break when bushing arrangement 1 is used.

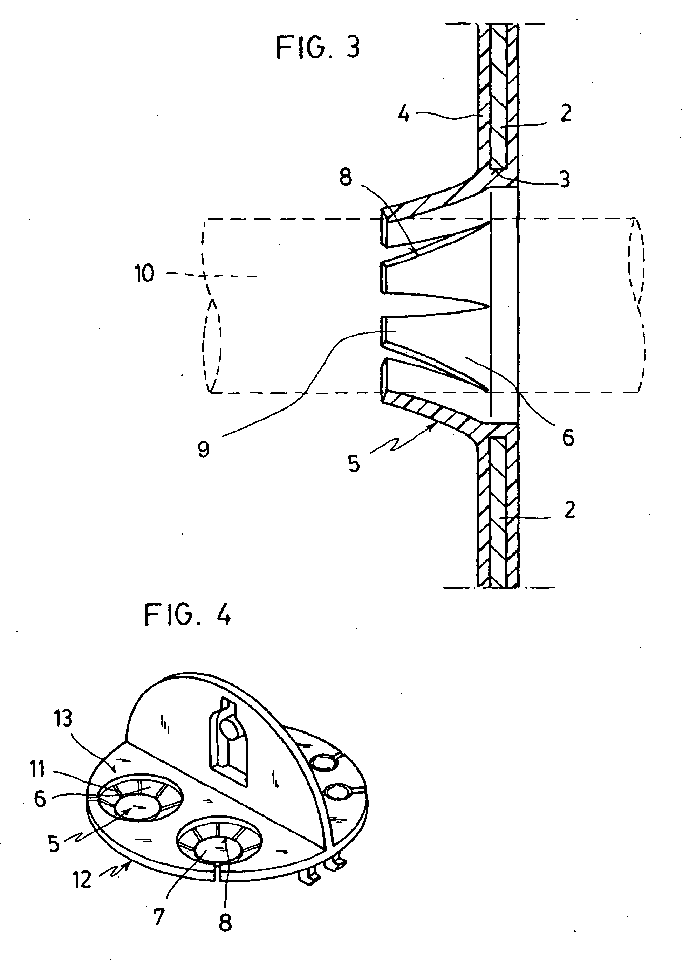

Also a preferable solution has been considered wherein weakening lines 8 of wall 6 of hollow projection 5 are formed by through grooves 11, as illustrated in Figure 4.

In particular, bushing arrangement 1 of the invention has been adopted for the case of a base disc 12 applied to an articulated guide, not shown in the drawings, which corresponds to an embodiment of Spanish utility model application No ES1052287U, as illustrated in Figure 4. This is a bushing arrangement wherein hollow projection 5 adopts a frustoconical configuration, inverted with respect to the plane of face 13 of base disc 12 that includes first thin plate 2, said configuration including wall 6 that forms the lateral surface thereof regularly channelled by through grooves 11 which, arranged according to the generating lines of hollow projection 5, form between every two consecutive grooves one of the cantilevered elastic tabs 9, which at their free end are associated by a weakening line 8 with bottom wall 7 of hollow projection 5.

The passage of an electrical conductor through hollow projection 5 in any of the arrangements shown in Figure 4 leads to the representation shown in Figure 3.

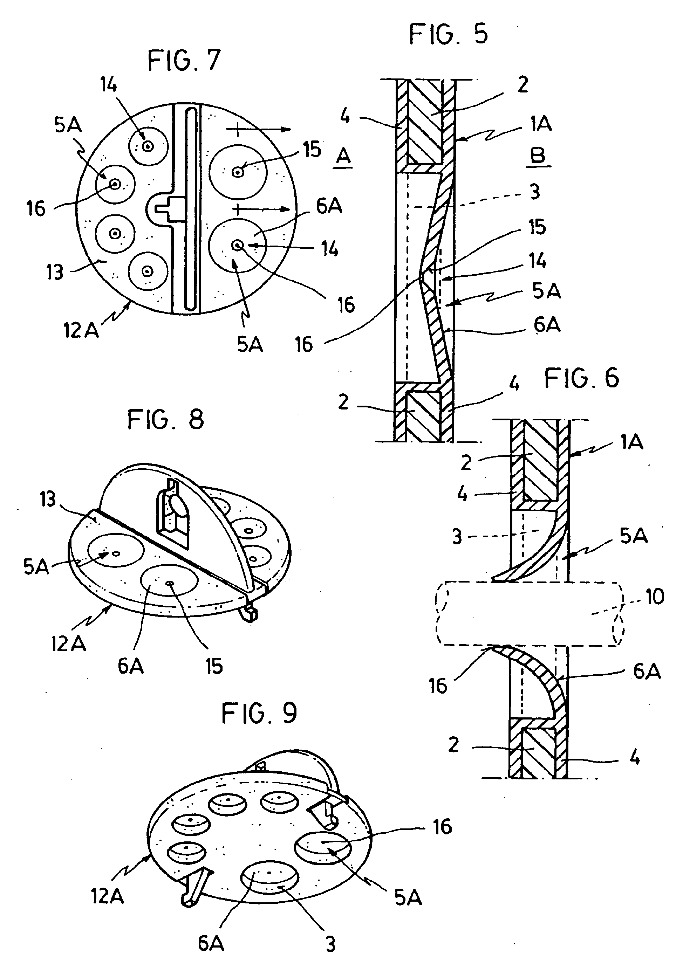

Figures 5 and 6 show a bushing arrangement 1A wherein first thin plate 2, which has at least one through opening 3, is intimately and superficially associated with a second plate 4 that is thinner than said first thin plate 2. In this embodiment, as in the preceding one, first plate 2 is trapped inside second plate 4, which is elastic and substantially flexible. Said second plate 4 forms a hollow projection 5A, which coincides with through opening 3 in first thin plate 2, and which extends through said through opening 3 from one face of second plate 4 without reaching the opposite face. Hollow projection 5A forms a wide wall 6A which, like a dome, has in the centre an area 14 provided with means that enable the passage therethrough of an electrical conductor 10, and the adaptation of its perimeter to said electrical conductor with the subsequent tightness to the passage of solids between one and the other of the spaces A and B separated by first thin plate 2, and/or the retention of said electrical conductor 10.

The means provided in central area 14 that enable the passage therethrough of an electrical conductor 10 arranged in hollow projection 5A consist in said projection adopting an inverted frustoconical shape with smooth walls 15 and a smaller base made up of a through hole 16.

## Claims

1. Bushing arrangement (1; 1A) adaptable for the passage therethrough of different diameter electrical conductors (10), said bushing arrangement (1; 1A) forming part or being associated with a wall arrangement comprising a first insulating plate (2) that has a substantially rigid surface and which forms a separation between two juxtaposed spaces (A, B), said first plate (2) having a plurality of through openings (3) **characterized in that** said first plate (2) is associated with a second elastically flexible plate (4), said second plate (4) forming hollow projections (5; 5A) a plurality of said through openings (3) and forming a wide dome-shaped wall (6; 6A) that has, in each of said hollow projections (5;5A) coinciding with one out of said plurality of the centre, an area provided with passage means that enable the passage therethrough of an electrical conductor (10) by adapting to the perimeter of the latter, wherein said second elastically flexible plate (4) is thinner than said first plate (2) and said first plate (2) is trapped inside said second plate (4) so that said first plate (2) is intimately and superficially associated, on its two faces, to said second plate (4).

2. Bushing arrangement (1A) according to claim 1, **characterized in that** said passage means, which enable the passage therethrough of an electrical conductor (10) by adapting to the perimeter of the latter, consist in said hollow projection (5A) having an inverted frustoconical shape with a smooth wall (6A) and a smaller base made up of a through hole (16).

3. Bushing arrangement (1A) according to claim 2, **characterised in that** said hollow projection (5A) has a first very obtuse inverted frustoconical shape, with a smooth wall (6A) that forms the lateral surface of said hollow projection (5A), and a central inverted frustoconical weakening the smaller base of which is shaped by said through hole (16).

4. Bushing arrangement (1) according to claim 1, **characterised in that** said passage means, which enable the passage therethrough of an electrical conductor (10) by adapting to the perimeter of the latter, consist in said hollow projection (5) having a bottom wall (7) and being channelled by weakening lines (8, 11) arranged so that, when said weakening lines (8) are broken, said bottom wall (7) falls away leaving cantilevered elastic tabs (9) formed in wall (6) of said hollow projection (5).

5. Bushing arrangement (1) according to claim 4, **characterised in that** said weakening lines (8) in wall (6) of said hollow projection (5) coincide with generating lines or edges of said wall (6).

6. Bushing arrangement (1) according to claim 4, **characterised in that** said weakening lines (11) in wall (6) of said hollow projection (5) are formed by through grooves.

7. Bushing arrangement (1) according to claim 6, **characterised in that** said hollow projection (5) has an inverted frustoconical shape and said through grooves (11) are arranged according to the generating lines of said hollow projection (5), so that between every two consecutive through grooves (11) one of said cantilevered elastic tabs (9) is formed, said cantilevered elastic tabs (9) being associated at their ends with bottom wall (7) of said hollow projection (5) by a weakening line (8).

8. Bushing arrangement (1, 1A) according to claim 1, **characterised in that** said hollow projection (5; 5A) has a shape included in the group comprising the lateral surfaces of the conic frustrums, pyramid frustrums and the frustrums of any solid created by a conic.

9. Bushing arrangement (1A) according to any of the claims 1 to 8, **characterised in that** said first plate (2) is trapped inside said second plate (4) and said hollow projection (5A) extends, through said through opening (3) in first plate (2), from one face of said second plate (4) without reaching the opposite face of said second plate (4).

10. Bushing arrangement (1) according to any of the claims 1 to 8, **characterised in that** said first plate (2) is trapped inside said second plate (4) and said hollow projection (5) extends, through said through opening (3) in first plate (2), from one face of said second plate (4) and extends beyond the opposite face of said second plate (4).

## Patentansprüche

1. Buchsenanordnung (1, 1A), anpassbar zum Durchführen elektrischer Leitungen (10) unterschiedlichen Durchmessers, wobei die Buchsenanordnung (1, 1A) einen Abschnitt formt oder mit einer Wandanordnung verbunden ist, welche eine erste Isolierplatte (2) aufweist, die eine im Wesentlichen starre Oberfläche hat und welche eine Abtrennung zwischen zwei nebeneinanderliegenden Räumen (A, B) formt, wobei die erste Platte (2) eine Vielzahl von Durchgangsöffnungen (3) hat, **dadurch gekennzeichnet, dass** die erste Platte (2) mit einer zweiten elastisch flexiblen Platte (4) verbunden ist, wobei die zweite Platte (4) eine Vielzahl von hohlen Auskragungen (5, 5A) formt, wobei jede der hohlen Auskragungen (5, 5A) mit einer von der Vielzahl von Durchgangsöffnungen (3) übereinstimmt und eine weite kuppelförmige Wand (6, 6A) formt, die in dem Zentrum einen Bereich hat, welcher mit Durchführungsmitteln ausgestattet ist, die die Durchführung einer elektrischen Leitung (10) durch Anpassen an den Umfang der Letztgenannten ermöglichen, wobei die zweite elastisch flexible Platte (4) dünner als die erste Platte (2) ist und die erste Platte (2) in der zweiten Platte (4) eingeschlossen ist, sodass die erste Platte (2) eng und oberflächlich mit ihren beiden Flächen mit der zweiten Platte (4) verbunden ist.

2. Buchsenanordnung (1 A) nach Anspruch 1, **dadurch gekennzeichnet, dass** die Durchführungsmittel, welche die Durchführung einer elektrischen Leitung (10) durch Anpassen an den Umfang der Letztgenannten ermöglichen, in der hohlen Auskragung (5A) bestehen, welche eine inverse Kegelstumpfform mit einer glatten Wand (6A) und einer kleineren aus einem Durchgangsloch (16) gemachten Basis hat.

3. Buchsenanordnung (1 A) nach Anspruch 2, **dadurch gekennzeichnet, dass** die hohle Auskragung (5A) eine erste sehr stumpfe inverse Kegelstumpfform hat, mit einer glatten Wand (6A), die die seitliche Oberfläche der hohlen Auskragung (5A) formt, und eine zentrale inverse Kegelstumpfform, welche die kleinere von dem Durchgangsloch (16) geformte Basis schwächt.

4. Buchsenanordnung (1) nach Anspruch 1, **dadurch gekennzeichnet, dass** die Durchführungsmittel, welche die Durchführung einer elektrischen Leitung (10) durch Anpassen an den Umfang der Letztgenannten ermöglichen, in der hohlen Auskragung (5) bestehen, welche eine Bodenwand (7) hat und durch Schwächungslinien (8, 11) ausgekehlt ist, welche so angeordnet sind, dass, wenn die Schwächungslinien (8) gebrochen sind, die Bodenwand (7) wegfällt und auskragende elastische Laschen (9) hinterlässt, welche in der Wand (6) der hohlen Auskragung (5) geformt sind.

5. Buchsenanordnung (1) nach Anspruch 4, **dadurch gekennzeichnet, dass** die Schwächungslinien (8) in Wand (6) der hohlen Auskragung (5) mit Erzeugungslinien oder Kanten der Wand (6) übereinstimmen.

6. Buchsenanordnung (1) nach Anspruch 4, **dadurch gekennzeichnet, dass** die Schwächungslinien (11) in Wand (6) der hohlen Auskragung (5) mittels Durchgangsnuten geformt sind.

7. Buchsenanordnung (1) nach Anspruch 6, **dadurch gekennzeichnet, dass** die hohle Auskragung (5) eine inverse Kegelstumpfform hat und die Durchgangsnuten (11) entsprechend zu den Erzeugungslinien der hohlen Auskragung (5) angeordnet sind, so dass zwischen jeweils zwei aufeinanderfolgenden Durchgangsnuten (11) eine der auskragenden elastischen Laschen (9) geformt ist, wobei die auskragenden elastischen Laschen (9) an ihren Enden mit Bodenwand (7) der hohlen Auskragung (5) mittels einer Schwächungslinie (8) verbunden sind.

8. Buchsenanordnung (1, 1A) nach Anspruch 1, **dadurch gekennzeichnet, dass** die hohle Auskragung (5, 5A) eine Form umfasst in der Gruppe aufweisend die seitlichen Oberflächen des konischen Kegelstumpfs, des pyramidischen Kegelstumpfs und des Kegelstumpfs irgendeines Körpers, welcher durch einen Kegel gebildet ist.

9. Buchsenanordnung (1A) nach einem der Ansprüche 1 bis 8, **dadurch gekennzeichnet, dass** die erste Platte (2) in der zweiten Platte (4) eingeschlossen ist und sich die hohle Auskragung (5A) durch die Durchgangsöffnung (3) in der ersten Platte (2) von einer Fläche der zweiten Platte (4) hindurch erstreckt, ohne die gegenüberliegende Fläche der zweiten Platte (4) zu erreichen.

10. Buchsenanordnung (1) nach einem der Ansprüche 1 bis 8, **dadurch gekennzeichnet, dass** die erste Platte (2) in der zweiten Platte (4) eingeschlossen ist und sich die hohle Auskragung (5) durch die Durchgangsöffnung (3) in der zweiten Platte (2) von einer Fläche der zweiten Platte (4) hindurch erstreckt und sich hinter die gegenüberliegende Fläche der zweiten Platte (4) erstreckt.

## Revendications

1. Agencement de bague de raccordement (1 ; 1A) adapté pour le passage à travers celui-ci de conducteurs électriques de différents diamètres (10), ledit agencement de bague de raccordement (1 ; 1A) faisant partie de ou étant associé à un agencement mural comprenant une première plaque d'isolation (2) ayant une surface sensiblement rigide et formant une séparation entre deux espaces juxtaposés (A, B), ladite première plaque (2) ayant une pluralité d'ouvertures traversantes (3), **caractérisé en ce que** ladite première plaque (2) est associée à une seconde plaque flexible élastiquement (4), ladite seconde plaque (4) formant une pluralité de saillies creuses (5 ; 5A), chacune de ladite pluralité de saillies creuses (5 ; 5A) coïncidant avec l'une de ladite pluralité d'ouvertures traversantes (3) et formant une paroi large en forme de dôme (6 ; 6A) ayant, au centre, une zone pourvue d'un moyen de passage permettant le passage à travers celui-ci d'un conducteur électrique (10) en s'adaptant au périmètre de celui-ci, dans lequel ladite seconde plaque flexible élastiquement (4) est plus fine que ladite plaque (2) et ladite première plaque (2) est piégée à l'intérieur de ladite seconde plaque (4) de sorte que ladite première plaque (2) est étroitement et superficiellement associée sur ses deux faces à ladite seconde plaque (4).

2. Agencement de boîte de raccordement (1A) selon la revendication 1, **caractérisé en ce que** ledit moyen de passage, permettant le passage à travers celui-ci d'un conducteur électrique (10) en s'adaptant au périmètre de celui-ci, se compose de ladite saillie creuse (5A) ayant une forme de tronc de cône inversé avec une paroi lisse (6A) et une petite base constituée d'un trou traversant (16).

3. Agencement de boîte de raccordement (1A) selon la revendication 2, **caractérisé en ce que** ladite saillie creuse (5A) a une première forme de tronc de cône inversé très obtus, avec une paroi lisse (6A) qui forme la surface latérale de ladite saillie creuse (5A), et un affaiblissement central en forme de tronc de cône inversé dont la petite base est formée par ledit trou traversant (16).

4. Agencement de boîte de raccordement (1) selon la revendication 1, **caractérisé en ce que** ledit moyen de passage, qui permet le passage à travers celui-ci d'un conducteur électrique (10) en s'adaptant au périmètre de celui-ci, se compose de ladite saillie creuse (5) ayant une paroi de fond (7) et étant rainurée par des lignes d'affaiblissement (8, 11) agencées de sorte que, lorsque lesdites lignes d'affaiblissement (8) sont cassées, ladite paroi de fond (7) tombe en laissant des pattes élastiques en porte-à-faux (9) formées dans la paroi (6) de ladite saillie creuse (5).

5. Agencement de boîte de raccordement (1) selon la revendication 4, **caractérisé en ce que** lesdites lignes d'affaiblissement (8) dans la paroi (6) de ladite saillie creuse (5) coïncident avec des génératrices ou des bords de ladite paroi (6).

6. Agencement de boîte de raccordement (1) selon la revendication 4, **caractérisé en ce que** lesdites lignes d'affaiblissement (11) dans la paroi (6) de ladite saillie creuse (5) sont formées par des rainures traversantes.

7. Agencement de boîte de raccordement (1) selon la revendication 6, **caractérisé en ce que** ladite saillie creuse (5) a une forme de tronc conique inversé et lesdites rainures traversantes (11) sont agencées selon génératrices de ladite saillie creuse (5), de sorte que chacune desdites pattes élastiques en porte-à-faux (9) est formée entre deux rainures traversantes consécutives (11), lesdites pattes élastiques en porte-à-faux (9) étant associées à leurs extrémités à la paroi de fond (7) de ladite saillie creuse (5) par une ligne d'affaiblissement (8).

8. Agencement de boîte de raccordement (1, 1A) selon la revendication 1, **caractérisé en ce que** ladite saillie creuse (5 ; 5A) a une forme incluse dans le groupe se composant des surfaces latérales de troncs de cône, de troncs de pyramide et de troncs de n'importe quel solide créé par un cône.

9. Agencement de boîte de raccordement (1A) selon l'une quelconque des revendications 1 à 8, **caractérisé en ce que** ladite première plaque (2) est piégée dans ladite seconde plaque (4) et ladite saillie creuse (5A) s'étend, à travers ladite ouverture traversante (3) dans la première plaque (2), depuis une face de ladite seconde plaque (4) sans atteindre la face opposée de ladite seconde plaque (4).

10. Agencement de boîte de raccordement (1) selon l'une quelconque des revendications 1 à 8, **caractérisé en ce que** ladite première plaque (2) est piégée dans ladite seconde plaque (4) et ladite saillie creuse (5) s'étend, à travers ladite ouverture traversante (3) dans la première plaque (2), depuis une face de ladite seconde plaque (4) et s'étend au-delà de la face opposée de ladite seconde plaque (4).
